# DEMANDE DE BREVET EUROPEEN

(11) **EP 1 122 469 A1**
(43) Date de publication de la demande: **08.08.2001**
(21) Numéro de dépôt: 00200375.4
(22) Date de dépôt: 04.02.2000
(51) Int. Cl.: F16J 13/02

(54) **Amélioration de l'étanchéité au niveau d'un plan de joint d'une enceinte sous pression**

(71) Demandeur: Techspace aero, 4041 Milmort - Herstal (BE)
(72) Inventeur: Meurant, Karin Juliette Fernande, 4250 Geer (BE)
(74) Mandataire: Berrou, Paul

(57) **Abrégé**

L'enceinte comporte deux pièces (2, 3) réunies selon un plan de joint (P1) avec interposition d'un joint statique (5) logeant dans une gorge (6) ménagée dans un face d'extrémité (7) d'une première pièce (2), tandis que la deuxième pièce (3) comporte une bride (8) ayant une face (9) en appui sur le joint (5). La bride (8) présente radialement à l'extérieur du joint statique (5) une zone (12) en porte-à-faux ayant une face (11) espacée de la face d'extrémité de la première pièce (2). Les moyens de serrage (4) de la bride (8) agissent sur la zone (12) en porte-à-faux avec une précontrainte importante. Cette disposition améliore l'étanchéité lorsque l'enceinte est sous pression.

## Description

L'invention concerne le domaine de l'étanchéité au niveau du plan de joint de deux pièces d'une enceinte sous pression, l'une des pièces comportant dans sa face d'extrémité une gorge logeant un joint statique tandis que l'autre pièce comporte une bride ayant une face en appui sur le joint statique.

La bride est fixée sur la première pièce par des moyens de serrage qui en général agissent dans une région radialement extérieure au joint statique.

Lors de la mise en pression de l'enceinte, la face de la bride en appui sur le joint tend à être soulevée par l'effet de fond, par suite de la déformation élastique de la bride, la paroi constitutive de la bride tendant à rotuler autour d'une ligne curviligne située au voisinage des moyens de serrage. Comme ces derniers agissent dans des zones radialement éloignées du joint statique, il peut se produire des fuites.

Le but de l'invention est de proposer une géométrie des faces en vis-à-vis des deux pièces, qui assure une meilleure étanchéité au niveau du plan de joint des deux pièces constitutives d'une enceinte sous pression.

L'invention concerne donc une enceinte comportant deux pièces réunies selon un plan de joint avec interposition d'un joint statique logeant dans une gorge ménagée dans une face d'extrémité d'une première pièce, tandis que la deuxième pièce comporte une bride ayant une face en appui sur le joint statique.

Selon l'invention cette enceinte est caractérisée par le fait que la bride présente, radialement à l'extérieur du joint statique, une zone en porte-à-faux ayant une face espacée de la face d'extrémité de la première pièce.

Avantageusement, un épaulement est prévu entre la paroi d'appui de la bride et la face de la zone en porte-à-faux.

Cet épaulement est rapproché de la gorge du joint. Cet épaulement constitue la ligne rotule autour de laquelle se déforme la bride sous l'action des forces de pression. Comme cette ligne rotule est voisine de la gorge de joint, le soulèvement de la face d'appui de la bride est réduit, et le joint statique reste étanche. Cette ligne rotule peut même être considérée comme une seconde barrière d'étanchéité.

Les moyens de serrage de la bride agissent sur la zone en porte-à-faux. Le porte-à-faux permet en outre de réaliser une précontrainte importante dans la fixation de la bride, par simple flexion de celle-ci. La précontrainte doit être calculée pour éviter un contact avec la première pièce en cas de flexion maximale.

D'autres avantages et caractéristiques de l'invention ressortiront à la lecture de la description suivante faite à titre d'exemple et en référence aux dessins annexés dans lesquels :
la figure 1 est une vue schématique en coupe d'une enceinte selon l'art antérieur, ayant un joint statique dans le plan de joint de deux pièces constitutives de l'enceinte ;
la figure 2 montre la déformation, due à l'effet de fond, de la bride lorsque l'enceinte de la figure 1 est sous pression ;
la figure 3 est une vue schématique en coupe d'une enceinte dans laquelle la géométrie des faces en vis-à-vis du plan de joint a été modifiée selon l'invention ;
la figure 4 montre la déformation due à l'effet de fond, lorsque l'enceinte de la figure 3 est sous pression ;
la figure 5 montre en coupe un exemple de mise en oeuvre de l'invention dans une vanne cryogénique ; et
la figure 6 montre en détail et à plus grande échelle le porte-à-faux réalisé sur la bride de la vanne de la figure 5.

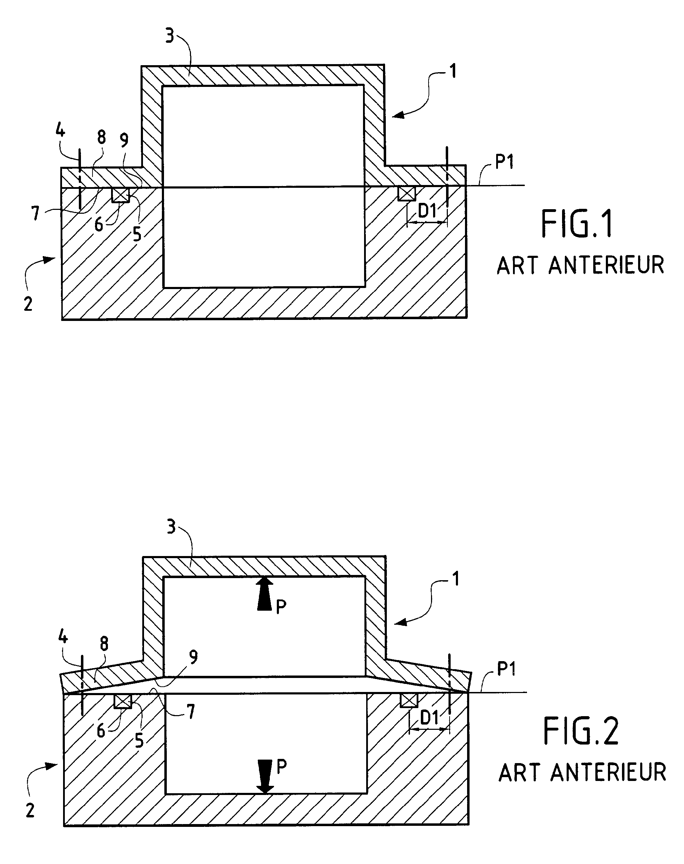

Les figures 1 et 2 montrent une enceinte 1 selon l'art antérieur, constituée de deux pièces 2 et 3 réunies selon un plan de joint P1, par des moyens de fixation 4 disposés à une distance D1 à l'extérieur d'un joint statique 5 qui loge dans une gorge 6 ménagée dans la face d'extrémité 7 de la pièce principale 2. La pièce 3 comporte une collerette ou bride 8 qui s'étend radialement vers l'extérieur et dont la face d'extrémité 9 est en contact avec la face d'extrémité 7 de la pièce 2 et est en appui sur le joint statique 5 afin d'assurer l'étanchéité.

Lorsque l'intérieur de l'enceinte 1 est soumis à une pression P, les forces de pression ont tendance à séparer les deux pièces 2 et 3. La bride 8 est soumise à des contraintes de déformation dues à l'effet de fond et elle tend à pivoter autour d'une ligne curviligne située au voisinage des moyens de fixation 4. La face d'extrémité 9 de la bride 8 tend à être soulevée du joint statique 5, d'une distance d'autant plus grande que D1 est grande, ce qui peut provoquer des fuites.

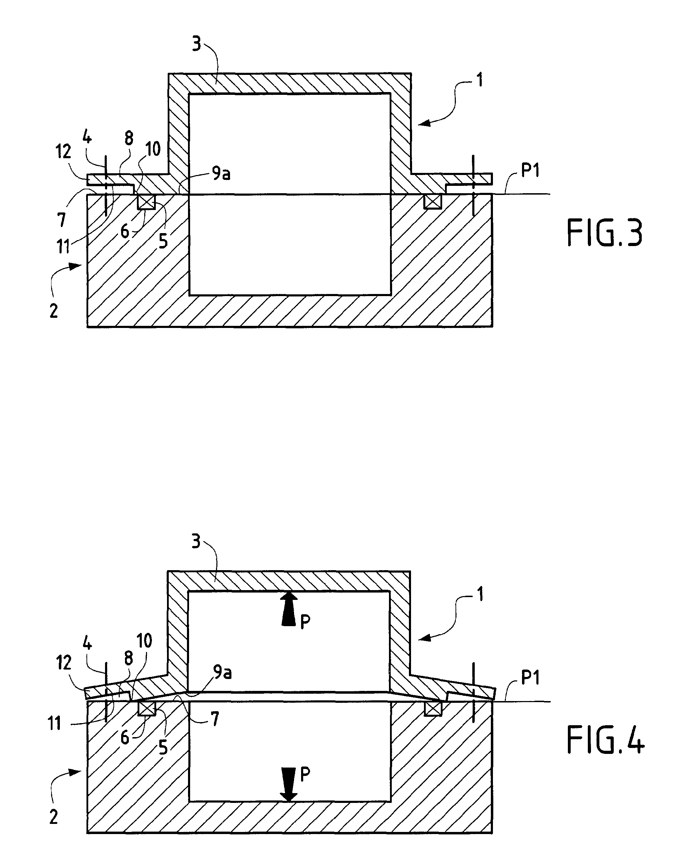

Les figures 3 et 4 montrent la modification apportée à la bride 8 de l'enceinte 1 décrite précédemment pour éviter les fuites au niveau du joint statique 5 suite à la déformation de la bride 8 due à l'effet de fond.

La face d'extrémité de la bride 8 comporte une première paroi 9a qui est en appui sur le joint statique 5, un épaulement 10 situé radialement à l'extérieur de la gorge 6 ménagée dans la face d'extrémité 7 de la pièce principale 2 et une deuxième paroi 11 qui, en l'absence de contrainte, est parallèle à la paroi 9a et située à distance de la face d'extrémité 7 de la pièce 2. La bride 8 présente ainsi à l'extérieur de l'épaulement 10 une zone 12 en porte-à-faux au-dessus de la face d'extrémité 7 de la pièce principale 2.

La fixation de la bride 8 sur la pièce principale 2 est réalisée par des moyens de fixation 4 qui agissent sur la zone en porte-à-faux 12. Le porte-à-faux permet de réaliser une précontrainte importante dans la fixation de la bride 8 par simple flexion de celle-ci. La précontrainte doit être calculée pour éviter un contact avec la pièce 2 en cas de flexion maximum de la bride 8.

Ainsi que cela est montré sur la figure 4, lorsque l'intérieur de l'enceinte 1 est soumis à une pression P, la pièce 3 tend à s'écarter de la pièce 2.

La bride 8 se déforme de nouveau, la face d'appui 9a pivote autour de l'épaulement 10 qui reste en appui contre la face d'extrémité 7 de la pièce principale 2. Cet épaulement 10 étant positionné au voisinage de la gorge 6, la paroi 9a reste en appui sur le joint statique 5. L'épaulement 10 peut être considéré comme une seconde barrière d'étanchéité.

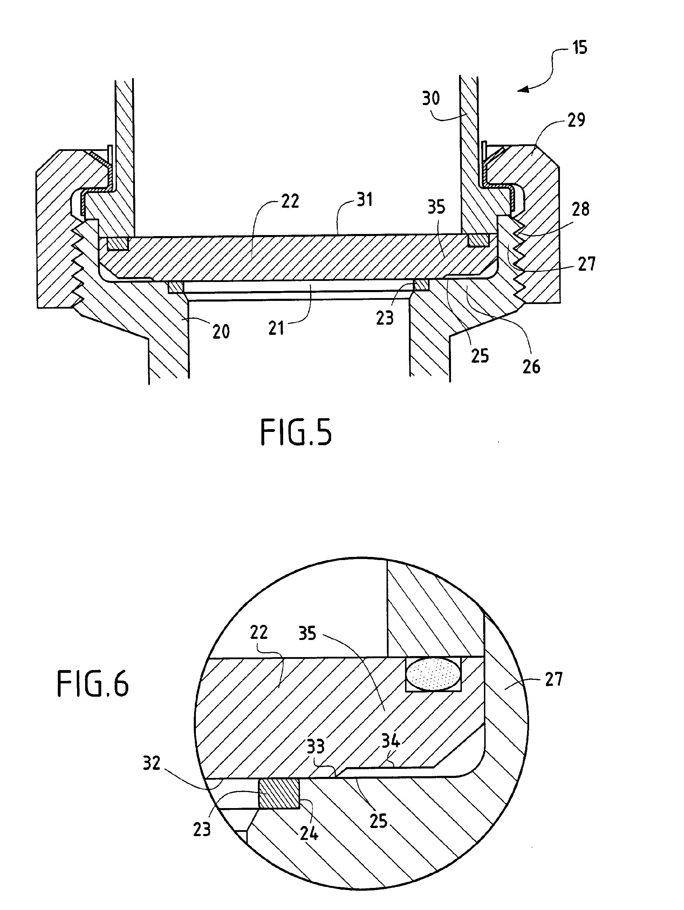

Les figures 5 et 6 montrent une application du principe de l'invention à une vanne cryogénique 15 constituée d'un cylindre 20 dont le fond 21 est obturé par un disque 22 avec interposition d'un joint métallique 23 logeant dans une gorge 24 ménagée dans la face frontale 25 du cylindre 20. Le cylindre présente près de sa face frontale 25 un bourrelet 26 qui s'étend radialement vers l'extérieur, puis se prolonge par un manchon axial 27 qui entoure le disque 22 et présente un filetage extérieur 28, servant au montage d'un collier de serrage 29. Le collier de serrage 29 est en appui sur une cale 30 disposée sur la face externe 31 du disque 22. Le diamètre de la cale 30 est conséquemment plus grand que le diamètre d'étanchéité du joint métallique 23. Ainsi que cela se voit clairement sur la figure 6, la face inférieure 32 du disque 22 présente à l'extérieur de la gorge 24 un épaulement 33 qui est prolongé par une surface 34 distante de la face frontale 25. Le disque 22 comporte ainsi sur son pourtour une zone annulaire 35 en porte-à-faux, précontrainte par flexion au moyen de la cale 30 et du collier de serrage 29.

## Revendications

1. Enceinte comportant deux pièces (2, 3) réunies selon un plan de joint (P1) avec interposition d'un joint statique (5) logeant dans une gorge (6) ménagée dans une face d'extrémité (7) d'une première pièce (2), tandis que la deuxième pièce (3) comporte une bride (8) ayant une face (9) en appui sur le joint statique (5), caractérisée par le fait que la bride (8) présente, radialement à l'extérieur du joint statique (5), une zone (12) en porte-à-faux ayant une face (11) espacée de la face d'extrémité (7) de la première pièce (2).

2. Enceinte selon la revendication 1, caractérisée par le fait qu'un épaulement (10) est prévu entre la paroi d'appui (9a) de la bride (8) et la face (11) de la zone (12) en porte-à-faux.

3. Enceinte selon la revendication 2, caractérisée par le fait que l'épaulement (10) est rapproché de la gorge (6) du joint (5).

4. Enceinte selon l'une quelconque des revendications 1 à 3, caractérisée par le fait que les moyens de serrage (4) agissent sur la zone (12) en porte-à-faux.

5. Enceinte selon la revendication 4, caractérisée par le fait que la zone (12) en porte-à-faux est soumise à une contrainte de flexion par des moyens de serrage (4).
